# FASCICULE DE BREVET EUROPEEN

(11) **EP 2 200 950 B1**
(45) Date de publication et mention de la délivrance du brevet: **21.09.2011**
(21) Numéro de dépôt: 08805105.7
(22) Date de dépôt: 07.10.2008
(51) Int. Cl.: C04B 35/447, C04B 35/495, C04B 35/645, G21F 9/30

(54) **UTILISATION DE LA TECHNIQUE DE FRITTAGE FLASH POUR LA SYNTHESE ET LA DENSIFICATION D'IODOAPATITES.**
VERWENDUNG EINER FLASHSINTERTECHNIK ZUR SYNTHESE UND VERDICHTUNG VON IODAPATITEN
USE OF A FLASH SINTERING TECHNIQUE FOR THE SYNTHESIS AND DENSIFICATION OF IODOAPATITES

(30) Priorité: 08.10.2007 FR 0758128
(43) Date de publication de la demande: 30.06.2010
(73) Titulaire: Commissariat à l'Énergie Atomique et aux Énergies Alternatives, 75015 Paris (FR); Centre National de la Recherche Scientifique, 75016 Paris (FR); UNIVERSITE DE BOURGOGNE, F-21000 Dijon (FR); Max-Planck-Gesellschaft zur Förderung der Wissenschaften e.V., 80539 München (DE)
(72) Inventeur: CAMPAYO, Lionel, F-30200 Bagnols Sur Ceze (FR); LE GALLET, Sophie, F-21000 Dijon (FR); BART, Florence, F-30200 Orsan (FR); BERNARD, Frédéric, F-21800 Neuilly Les Dijon (FR); GRIN, Yuri, 01277 Dresden (DE)
(74) Mandataire: Ilgart, Jean-Christophe
(86) Numéro de dépôt international: PCT/EP2008/063392
(87) Numéro de publication internationale: WO 2009/047246

(56) Documents cités:
- WO-A-96/18196
- WO-A-2006/020090
- JP-A- 2005 037 165

## Description

### DOMAINE TECHNIQUE

La présente invention se rapporte à l'utilisation de la technique dite de « frittage flash », également connue sous les sigles SPS (de Spark **P**lasma **S**intering) et FAST (de **F**ield **A**ctivated **S**intering Technique), pour la synthèse et la densification d'apatites à l'iode ou iodoapatites.

Cette invention trouve notamment application dans le domaine du retraitement des combustibles nucléaires usés où elle est susceptible d'être utilisée pour conditionner et stocker dans une apatite l'iode radioactif présent dans les effluents aqueux produits au cours de ce retraitement et, en particulier, l'iode 129.

### ÉTAT DE LA TECHNIQUE ANTERIEURE

L'iode est un produit de fission présent dans les combustibles nucléaires usés dont l'isotope 129 possède une demi-vie de 15,7 millions d'années.

Compte tenu de sa radiotoxicité pour l'homme qui est étroitement liée à son affinité pour la glande thyroïdienne dans laquelle il se concentre, un certain nombre de travaux ont été réalisés au cours de ces dernières années sur le conditionnement et le stockage de l'iode dans une matrice durable, résistante à la dissémination par des vecteurs tels que l'eau.

Des études ont montré qu'il est possible d'incorporer de l'iode au sein d'une céramique appartenant à la famille des apatites.

Des iodoapatites peuvent notamment être synthétisées par réaction entre de l'iodure de plomb (PbI₂) et un phosphovanadate de plomb de formule Pb₃(VO₄)_{1,6}(PO₄)_{0,4} (WO-A-96/18196 **[1]**) suivant la réaction :

3Pb₃(VO₄)_{1,6}(PO₄)_{o,4} + PbI₂ → Pb₁₀(VO₄)_{4,8}(PO₄)_{1,2}I₂.

Cette synthèse peut être réalisée dans une ampoule de quartz scellée pour des températures de l'ordre de 700°C et des durées de palier d'une dizaine d'heures, ou bien par voie céramique, c'est-à-dire par frittage réactif sous charge (C. Guy et al., C. R. Physique 2002, 3, 827-837 **[2] ;** E. R. Maddrell et P. K. Abraitis, Material Research Society Symposium Proceedings 2004, 807, 261-266 **[3]**).

Dans ce dernier cas, on ajoute aux réactifs un matériau tiers dont la fonction est de permettre un confinement étanche de l'iode et dont la nature varie selon la technique de frittage choisie.

Ainsi, dans le cas d'un frittage réactif sous charge uniaxiale ou HUP (de **H**ot **U**niaxial **P**ressing), c'est l'un des réactifs, en l'espèce le phosphovanadate de plomb, qui peut être utilisé comme gangue [F. Audubert et al., Solid State Ionics 1997, 95(1-2), 113-119 **[4]).** Ceci permet de limiter la diffusion de l'iodure de plomb au dessus de la température de fusion de ce dernier (410°C) La gangue sert alors non seulement à confiner l'iode mais aussi de réservoir consommable pour la formation de l'iodoapatite.

Dans le cas d'un frittage réactif sous charge isostatique ou HIP (de **H**ot **I**sostatic **P**ressing), des conteneurs de différentes natures (métal, verre, ...) peuvent être utilisés.

Dans tous les cas, l'élaboration d'une iodoapatite requiert des températures supérieures à 500°C, températures pour lesquelles une volatilisation de l'iode serait observée en l'absence de confinement étanche. En effet, dans le cas d'une apatite de composition Pb₁₀(VO₄)_{4,8}(PO₄)_{1,2}I₂, le début des pertes de masse, tel que déterminé par analyse thermogravimétrique, correspond à 500°C.

En outre, le frittage réactif n'est pas sans poser un certain nombre de difficultés. En effet, parvenir à un rendement de réaction proche de 100% tout en garantissant un taux de densification élevé, c'est-à-dire supérieur à 92%, se révèle être complexe. Or, ces deux conditions doivent être satisfaites si l'on veut minimiser les quantités d'iode susceptibles d'être relâchées ultérieurement par lixiviation par les apatites à l'iode au cours de leur stockage dans des sites de type couche géologique profonde.

Dans le cas d'un frittage réactif HUP, l'optimisation des conditions de frittage permet d'élaborer des composites cer-cer qui incorporent l'iode avec un taux massique de 2,7% au sein d'un coeur d'iodoapatite présentant un taux de densification de 88%. Pour ces valeurs, une fraction de porosité ouverte demeure dans le matériau, ce qui a pour conséquence le développement d'une surface propice à la mobilisation de l'iode par un vecteur potentiel (dans l'hypothèse conservatrice où la gangue n'assure aucune fonction de rétention vis-à-vis de la dissémination de l'iode).

Pour éviter l'écueil du frittage réactif, la dissociation des étapes de synthèse et de frittage a été envisagée (M. UNO et al., Journal of Nuclear Materials 2001, 294(1-2), 119-122 **[5]**). Toutefois, dans ce cas, on totalise deux étapes à hautes températures, ce qui est énergétiquement pénalisant. En outre, la gestion de l'enceinte dévolue à la synthèse, alors contaminée en iode, alourdit considérablement le procédé, tant en termes de temps que de coûts.

Il se trouve que, dans le cadre de leurs travaux, les Inventeurs ont constaté que l'utilisation de la technique de frittage flash pour synthétiser et densifier des iodoapatites, en lieu et place des techniques de frittage conventionnelles de type HUP ou HIP, permet, de manière surprenante, de résoudre tous les problèmes évoqués ci-dessus.

En particulier, ils ont constaté que l'utilisation de la technique de frittage flash permet à la fois d'obtenir des iodoapatites qui présentent des taux de densification supérieurs à 97% pour des rendements réactionnels de 100% ou proches de cette valeur, et de s'affranchir de la nécessité d'employer d'une gangue destinée à assurer un confinement étanche de l'iode.

Et c'est sur ces constatations qu'est basée la présente invention.

### EXPOSÉ DE L'INVENTION

L'invention a donc pour objet l'utilisation de la technique de frittage flash pour la synthèse et la densification d'une iodoapatite.

On rappelle que la littérature entend par « frittage flash », un frittage dans lequel le matériau à densifier est soumis à une pression uniaxiale en matrice comme dans un frittage HUP, mais dans lequel la matrice, qui est constituée d'un matériau conducteur de l'électricité (typiquement du graphite), est traversée par un courant électrique, généralement un courant continu pulsé. Cette matrice agit donc comme source de chaleur, d'où une vitesse de chauffage élevée et un bon transfert de cette chaleur au matériau à densifier.

Il en résulte qu'à taux de densification équivalents, cette technique de frittage permet en règle générale d'utiliser des températures et des durées de frittage inférieures à celles requises par les techniques de frittage conventionnelles.

L'invention peut concerner la synthèse et la densification de tout type d'iodoapatite. Ainsi, par exemple, elle peut s'appliquer à la préparation des iodoapatites suivantes :
* Ca₁₀(VO₄)₆I₂ telle que décrite par A. Ditte dans Annales de Chimie et de Physique 1886, 6ème série (tome VIII), 502 **[6]** ;
* Ba₁₀(ReO₅)₆I₂ telle que décrite par G. Baud et al. dans Materials Research Bulletin 1979, 14, 675 **[7]** ; et
* Sr₁₀(ReO₅)₆I₂ telle que décrite par M. S. Schriewer et W. Jeitschko dans Journal of Solid State Chemistry 1993, 107, 1 **[8].**

Toutefois, on préfère que l'iodoapatite soit obtenue à partir d'un composé de formule (I) ci-après :

M₃(XO4)₂-₂ₓ(PO₄)₂ₓ (I)

dans laquelle :
- M est choisi parmi le plomb et le cadmium,
- X est choisi parmi le vanadium et l'arsenic, et
- x est égal à 0 ou est supérieur à 0 tout en étant inférieur à 1,
que l'on fait réagir à l'état solide avec un composé iodé tel qu'un iodure métallique, se trouvant également à l'état solide, les iodoapatites ainsi obtenues s'étant, en effet, révélées présenter des propriétés de stabilité et de résistance particulièrement bien adaptées à un stockage à long terme.

C'est la raison pour laquelle l'invention comprend de préférence :
a) le mélange d'un composé répondant à la formule (I) ci-avant et d'un composé iodé, ces composés se trouvant à l'état de poudres ; puis
b) le frittage réactif du mélange résultant par la technique de frittage flash.

Conformément à l'invention, le composé iodé est avantageusement un iodure métallique, en particulier l'iodure de plomb (PbI₂) ou l'iodure d'argent (AgI), auquel cas la réaction de ce composé avec le composé de formule (I) s'écrit :

PbI₂ + 3[M₃(XO₄)₂₋₂ₓ(PO₄)₂ₓ] → PbM₉(XO₄)₆₋₆ₓ(PO₄)₆ₓI₂,

ou bien

AgI + 3[M₃(XO₄)₂₋₂ₓ(PO₄)₂ₓ] → AgM₉(XO₄)₆₋₆ₓ(PO₄)₆ₓI□,

le symbole □ représentant une lacune dans le site de l'iode.

Selon une disposition particulièrement préférée de l'invention, le composé de formule (I) est un vanadate ou un phosphovanadate de plomb de formule Pb₃(VO₄)₂₋₂ₓ(PO₄)₂ₓ dans laquelle x a la même signification que précédemment, tandis que le composé iodé est l'iodure de plomb de sorte que l'iodapatite répond à la formule (II) ci-après : Pb₁₀(VO₄)₆₋₆ₓ(PO₄)₆ₓI₂ (II) dans laquelle x a la même signification que précédemment.

De préférence, x va de 0,1 à 0,75 et, mieux encore, de 0,1 à 0,3, la valeur toute préférée de x étant de 0,2.

Dans ce dernier cas, le composé de formule (I) est Pb₃(VO₄)_{1,6}(PO₄)_{0,4} et conduit, par réaction avec PbI₂, à l'iodoapatite de formule Pb₁₀(VO₄)_{4,8}(PO₄)_{1,2}I₂.

Conformément à l'invention, le frittage réactif est avantageusement réalisé à une température allant de 400 à 500°C et, mieux encore, de 400 à 450°C, sous une pression uniaxiale allant de 15 à 150 MPa et, de préférence, de 40 à 100 MPa.

La durée de frittage est, elle, de préférence de 3 à 30 minutes et, mieux encore, de 5 à 20 minutes à compter du moment où la température de frittage est atteinte.

Les composés de formule (I) peuvent être préparés par des procédés conventionnels.

Ainsi, par exemple, dans le cas où M représente Pb, les composés de formule (I) dans laquelle x est égale à 0 peuvent être obtenus par réaction solide/solide d'oxyde de plomb et de pentoxyde de vanadium ou d'oxyde de plomb et de HN₄H₂AsO₄, à une température de l'ordre de 1000°C, tandis que les composés de formule (I) dans laquelle x est supérieur à 0 peuvent être obtenus en utilisant un réactif supplémentaire, propre à fournir des ions phosphate comme, par exemple, l'hydrogénophosphate de diammonium.

Dans le cas où M représente Cd, on peut utiliser des procédés similaires dans lequel l'oxyde de plomb est remplacé par l'oxyde de cadmium.

Les composés de formule (I) peuvent également être réduits en poudre par des procédés de broyage conventionnels de type broyage mécanique, broyage par attrition, etc, l'essentiel étant d'obtenir une poudre de granulométrie très fine, idéalement au plus égale à 1 µm, pour obtenir un contact intime entre cette poudre et la poudre du composé iodé.

L'invention a de nombreux avantages, à savoir :
- elle permet de réaliser la synthèse et la densification d'iodoapatites en une seule étape ;
- elle permet de réaliser cette synthèse et cette densification à des températures suffisamment basses et pendant des durées suffisamment courtes pour supprimer les risques de diffusion des composés iodés utilisés comme réactifs et de volatilisation de l'iode, et par conséquent de s'affranchir de la nécessité de recourir à une gangue étanche de confinement ;
- elle conduit, en outre, à l'obtention d'iodoapatites de très haute compacité, qui présentent des taux de densification supérieurs à 97% pour des rendements réactionnels de 100% ou proches de cette valeur et qui remplissent de ce fait les critères exigés en matière d'iodoapatites pour le conditionnement et le stockage d'iode radioactif dans des sites de type couche géologique profonde.

Elle présente donc un intérêt tout particulier pour conditionner et stocker dans une apatite l'iode radioactif présent dans les effluents aqueux issus du retraitement des combustibles nucléaires usés.

Aussi, conformément à l'invention, l'iode présent dans l'iodoapatite est, de préférence, de l'iode radioactif et, plus particulièrement, de l'iode 129.

Dans ce cas, le composé iodé utilisé comme réactif pour la synthèse de l'iodoapatite correspond au composé obtenu lors de l'élimination de l'iode radioactif des effluents aqueux d'usines de retraitement de combustibles nucléaires usés, ou est préparé directement à partir de ceux-ci.

L'invention sera mieux comprise à la lumière du complément de description qui suit, qui se rapporte à un exemple de préparation d'une iodoapatite et qui se réfère aux figures annexées.

Bien entendu, ce complément de description n'est donné qu'à titre d'illustration de l'objet de l'invention et ne constitue en aucun cas une limitation de cet objet.

### BRÈVE DESCRIPTION DES FIGURES

La figure 1 représente de façon schématique un exemple de matrice utilisable pour synthétiser et densifier une iodoapatite par la technique de frittage flash.
La figure 2 représente le diffractogramme de rayons X d'une iodoapatite préparée conformément à l'invention.

### EXPOSÉ DÉTAILLÉ D'UN MODE DE MISE EN OEUVRE PARTICULIER

On réalise une iodoapatite de formule Pb₁₀(VO₄)_{4,8}(PO₄)_{1,2}I₂ de la façon suivante.

### Préparation d'un mélange phosphovanadate de plomb/ iodure de plomb :

On prépare tout d'abord du phosphovanadate de plomb de composition Pb₃(VO₄)_{1,6}(PO₄)_{0,4} en calcinant sous air, à une température de 1000°C et pendant une heure, un mélange stoechiométrique d'oxyde de plomb, de pentoxyde de vanadium et d'hydrogénophosphate de diammonium, préalablement homogénéisé par un mélange mécanique.

La réaction est la suivante :

3PbO + 0,8V₂O₅ + 0,4(NH₄)₂HPO₄ → Pb3(VO₄)_{1,6}(PO₄)_{0,4} + 0,6H₂O + 0,8NH₃.

On soumet ensuite le phosphovanadate de plomb ainsi obtenu à un premier broyage dans de l'eau ultrapure (rapport massique solide/eau = 1) en utilisant un broyeur planétaire muni de jarres et de boulets en carbure de tungstène. Ce broyage est effectué pendant 1 heure, à une vitesse de 300 tr/min.

Puis, on soumet le phosphovanadate de plomb à un second broyage par attrition dans l'eau. Ce broyage est effectué dans une jarre en zircone de 750 cm³ avec un rapport massique poudres/billes égal à 1/9 (masse de la poudre = 100 g) et en utilisant comme milieu de broyage, un milieu constitué de billes en zircone de 1 et 2 mm de diamètre en quantités pondérales égales. La vitesse de rotation de l'axe est fixée à 450 tr/min et le temps de broyage à 4 heures. On tamise la suspension ainsi obtenue sur un tamis avec un seuil de coupure à 125 µm pour séparer les billes de broyage, puis on la sèche à l'étuve jusqu'à évaporation totale de l'eau et obtention d'une poudre.

On prépare, par ailleurs, de l'iodure de plomb par précipitation dans l'eau, à température ambiante et à un pH de 5 (obtenu par addition d'acide nitrique), à partir d'iodure de sodium et de nitrate de plomb dans un rapport molaire NaI/Pb(NO₃)₂ égal à 2.

Dans ce cas, la réaction est la suivante :

2NaI_{(aq)} + Pb(NO₃)_{2(aq)} → PbI₂₍ₛ₎ + 2NaNO_{3(aq)}.

Après filtration, la poudre de PbI₂ obtenue est séchée à l'étuve pendant une nuit.

On mélange ensuite en proportions stoechiométriques le phosphovanadate de plomb et l'iodure de plomb (soit 3 moles de Pb₃(VO₄)_{1,6}(PO₄)_{0,4} pour une mole de PbI₂) et on homogénéise ce mélange par attrition en utilisant des conditions opératoires identiques à celles décrites ci-avant pour le phosphovanadate de plomb seul à ceci près que l'eau est remplacée par de l'éthanol dénaturé.

### Frittage réactif du mélange phosphovanadate de plomb/ iodure de plomb :

Le frittage réactif du mélange phosphovanadate de plomb/iodure de plomb est réalisé en utilisant un équipement de frittage flash Sumitomo, modèle Dr Sinter L, qui comprend :
■ une matrice en graphite dans laquelle est placé un échantillon du mélange phosphovanadate de plomb/iodure de plomb ; et
■ deux électrodes qui viennent s'appliquer sur la matrice et qui sont reliées à un générateur de courant continu pulsé.

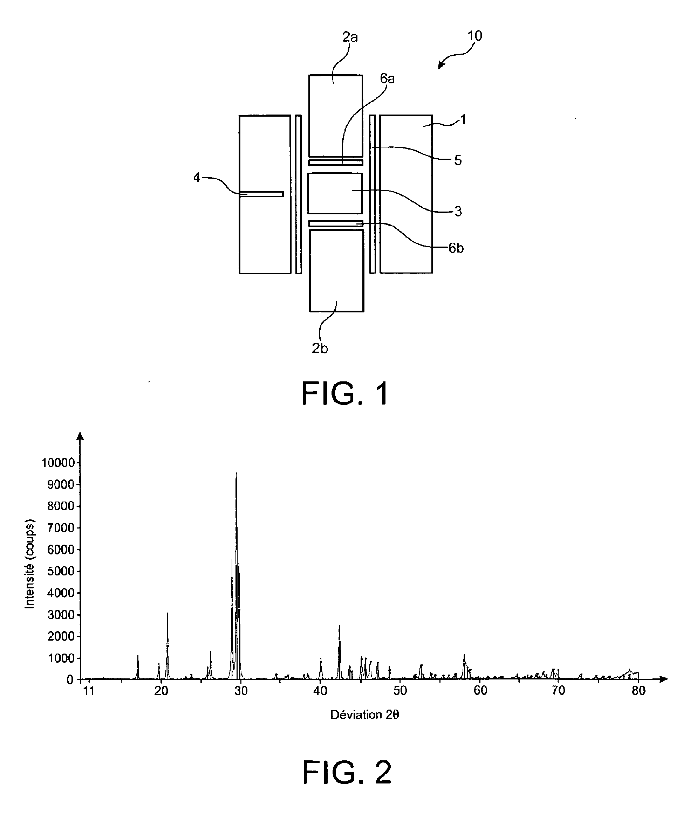

Comme visible sur la figure 1 qui représente de façon schématique la matrice (référencée 10 sur cette figure), cette dernière se compose d'un corps de matrice cylindrique creux 1 et de deux pistons symétriques, respectivement 2a et 2b, qui permettent de transmettre à l'échantillon 3 une pression uniaxiale tout au long du frittage.

Le corps de matrice 1 est percé en son centre d'un logement 4 pour permettre l'introduction d'un thermocouple dont la fonction est de mesurer et réguler la température. Ce thermocouple se trouve alors à 2 mm de l'échantillon 3.

Le corps de matrice 1 est chemisé par une feuille de graphite (Papyex^{®}) 5 qui est destinée à assurer une bonne conduction du courant tout le long de la matrice et à faciliter le démoulage de l'échantillon à l'issue du frittage. De la même manière, deux rondelles de Papyex^{®}, respectivement 6a et 6b, sont interposées entre l'échantillon 3 et les pistons 2a et 2b.

Une pression externe de 70 MPa est appliquée à froid pendant 2 minutes avant le lancement du frittage qui est réalisé sous un vide primaire dynamique. Un courant de 400 ampères environ, en créneaux (pulses de 12 ms séparés par un arrêt de 2 ms), est appliqué entre les deux électrodes.

Différents essais sont réalisés en faisant varier une des trois conditions opératoires suivantes : température de frittage, temps de frittage (comptabilisé à partir du moment où la température de frittage est atteinte) et pression externe, cette dernière étant soit maintenue à 70 MPa, soit abaissée à 40 MPa au terme de la pré-compaction à froid.

A l'issue de chaque essai, le taux de densification de l'échantillon est calculé en faisant le rapport entre la masse volumique présentée par les échantillons (déterminée par pesée hydrostatique) et la masse volumique théorique de l'iodoapatite (7,117 g/cm³).

Le tableau 1 présente les résultats obtenus en fonction des conditions opératoires.

**TABLEAU 1**

| **Température de frittage (°C)** | **Temps de frittage (min)** | **Vitesse de chauffe (°C/min)** | **Pression externe (MPa)** | **Taux de densification (%)** |
|---|---|---|---|---|
| 400 | 5 | 50 | 40 | 97,5 |
| 400 | 20 | 50 | 40 | 97,8 |
| 400 | 5 | 50 | 70 | 97,9 |
| 450 | 5 | 50 | 40 | 98,0 |

Ce tableau montre que l'utilisation de la technique de frittage flash d'obtenir des iodoapatites qui présentent des taux de densification supérieurs à 97% et, donc, significativement supérieurs à ceux obtenus par les techniques de frittage conventionnelles de type HUP ou HIP et ce, pour des températures de frittage inférieures d'une centaine de degrés à celles requises par les techniques de frittage conventionnelles et pour des temps de frittage également nettement plus bas (de 5 à 20 minutes *versus* 4 à 10 heures).

Par ailleurs, comme le montre la figure 2, une caractérisation des iodoapatites ainsi obtenues par diffraction des rayons X a permis de confirmer que ces iodoapatites répondent bien à la formule Pb₁₀(VO₄)_{4,8}(PO₄)_{1,2}I₂. En outre, aucune phase secondaire n'a été identifiée, ce qui confirme un rendement de synthèse de 100% (à la limite de détection près, qui est de l'ordre de quelques pourcents).

### REFERENCES CITEES

**[1]** WO-A-96/18196
**[2]** C. Guy et al., C. R. Physique 2002, 3, 827-837
**[3]** E. R. Maddrell et P. K. Abraitis, Material Research Society Symposium Proceedings 2004, 807, 261-266
**[4]** F. Audubert et al., Solid State Ionics 1997, 95(1-2), 113-119
**[5]** M. UNO et al., Journal of Nuclear Materials 2001, 294(1-2), 119-122
**[6]** A. Ditte, Annales de Chimie et de Physique 1886, 6ème série (tome VIII), 502
**[7]** G. Baud et al., Materials Research Bulletin 1979, 14, 675
**[8]** M. S. Schriewer et W. Jeitschko, Journal of Solid State Chemistry 1993, 107, 1

## Revendications

1. Utilisation de la technique dite de frittage flash pour la synthèse et la densification d'une iodoapatite.

2. Utilisation selon la revendication 1, qui comprend :
a) le mélange d'un composé iodé et d'un composé de formule (I) ci-après :
M3(XO₄)₂₋₂ₓ(PO₄)₂ₓ (I)
dans laquelle :
M est choisi parmi le plomb ou le cadmium ;
X est choisi parmi le vanadium ou l'arsenic ; et
x est égal à 0 ou est supérieur à 0 tout en étant inférieur à 1 ;
le composé iodé et le composé de formule (I) se présentant sous la forme de poudres ; puis
b) le frittage réactif du mélange ainsi obtenu par la technique de frittage flash.

3. Utilisation selon la revendication 2, dans laquelle le composé iodé est choisi parmi l'iodure de plomb (PbI₂) et l'iodure d'argent (AgI).

4. Utilisation selon la revendication 2 ou la revendication 3, dans laquelle le composé de formule (I) est un vanadate ou un phosphovanadate de plomb de formule :
Pb₃(VO₄)₂₋₂ₓ(PO₄)₂ₓ
dans laquelle x a la même signification que précédemment ;
tandis que le composé iodé est de l'iodure de plomb de sorte que l'iodapatite répond à la formule (II) ci-après :
Pb₁₀(VO₄)₆₋₆ₓ(PO₄)₆ₓI₂ (II)
dans laquelle x a la même signification que précédemment.

5. Utilisation selon l'une quelconque des revendications 2 à 4, dans laquelle x va de 0,1 à 0,75 et, de préférence, de 0,1 à 0,3.

6. Utilisation selon l'une quelconque des revendications 2 à 5, dans laquelle x est égal à 0,2.

7. Utilisation selon l'une quelconque des revendications 2 à 6, dans laquelle le frittage réactif est réalisé à une température allant de 400 à 500°C et, de préférence, de 400 à 450°C.

8. Utilisation selon l'une quelconque des revendications 2 à 7, dans laquelle le frittage réactif est réalisé sous une pression uniaxiale allant de 15 à 150 MPa et, de préférence, de 40 à 100 MPa.

9. Utilisation selon l'une quelconque des revendications 2 à 8, dans laquelle la durée du frittage réactif est de 3 à 30 minutes et, de préférence, de 5 à 20 minutes à compter du moment où la température de frittage est atteinte.

10. Utilisation selon l'une quelconque des revendications précédentes, dans laquelle l'iode présent dans l'iodoapatite est de l'iode radioactif.

11. Utilisation selon la revendication 10, dans laquelle l'iode radioactif est de l'iode 129.

## Claims

1. Use of the technique known as flash sintering for the synthesis and densification of an iodoapatite.

2. Use according to Claim 1, which comprises:
a) the mixing of an iodo compound and of a compound of formula (I) below:
M3(XO₄)₂₋₂ₓ(PO₄)₂ₓ (I)
in which:
M is chosen from lead or cadmium;
X is chosen from vanadium or arsenic; and
x is equal to 0 or is greater than 0 while being less than 1;
the iodo compound and the compound of formula (I) being in the form of powders; then
b) the reactive sintering of the mixture thus obtained by the flash sintering technique.

3. Use according to Claim 2, in which the iodo compound is chosen from lead iodide (PbI₂) and silver iodide (AgI).

4. Use according to Claim 2 or Claim 3, in which the compound of formula (I) is a lead vanadate or phosphovanadate of formula:
Pb₃(VO₄)₂₋₂(PO₄)₂ₓ
in which x has the same meaning as before;
whilst the iodo compound is lead iodide so that the iodoapatite corresponds to the formula (II) below:
Pb₁₀(VO₄)₆₋₆ₓ(PO₄)₆ₓI₂ (II)
in which x has the same meaning as before.

5. Use according to any one of Claims 2 to 4, in which x ranges from 0.1 to 0.75 and, preferably, from 0.1 to 0.3.

6. Use according to any one of Claims 2 to 5, in which x is equal to 0.2.

7. Use according to any one of Claims 2 to 6, in which the reactive sintering is carried out at a temperature ranging from 400 to 500°C and, preferably, from 400 to 450°C.

8. Use according to any one of Claims 2 to 7, in which the reactive sintering is carried out under a uniaxial pressure ranging from 15 to 150 MPa and, preferably, from 40 to 100 MPa.

9. Use according to any one of Claims 2 to 8, in which the duration of the reactive sintering is from 3 to 30 minutes and, preferably, from 5 to 20 minutes starting from the moment when the sintering temperature is attained.

10. Use according to any one of the preceding claims, in which the iodine present in the iodoapatite is radioactive iodine.

11. Use according to Claim 10, in which the radioactive iodine is iodine-129.

## Patentansprüche

1. Verwendung der sogenannten Schnellsintertechnik für die Synthese und die Verdichtung eines Iod-Apatits.

2. Verwendung nach Anspruch 1, die Folgendes umfasst:
a) Vermischen einer iodhaltigen Verbindung und einer Verbindung der nachstehenden Formel (I):
M₃(XO₄)₂₋₂ₓ(PO₄)2_{,x} (I)
wobei:
M aus Blei und Cadmium ausgewählt ist;
X aus Vanadium oder Arsen ausgewählt ist; und
x gleich 0 ist oder größer als 0 ist, wobei es jedoch kleiner als 1 ist;
die iodhaltige Verbindung und die Verbindung nach Formel (I) in Form von Pulvern vorliegen; und anschließend
b) Reaktionssintern der auf diese Weise erhaltenen Mischung mittels der Schnellsintertechnik.

3. Verwendung nach Anspruch 2, wobei die iodhaltige Verbindung aus Bleiiodid (PbI₂) und Silberiodid (AgI) ausgewählt ist.

4. Verwendung nach Anspruch 2 oder Anspruch 3, wobei die Verbindung nach Formel (I) ein Bleivanadat oder - phosphovanadat der folgenden Formel ist:
Pb₃(VO₄)₂₋₂ₓ(PO₄)₂ₓ
wobei x dieselbe Bedeutung wie vorstehend hat;
während die iodhaltige Verbindung Bleiiodid ist, sodass der Iod-Apatit der nachstehenden Formel (II) entspricht:
Pb₁₀(VO₄)₆₋₆ₓ(PO₄)₆ₓI₂ (II)
wobei x dieselbe Bedeutung wie vorstehend hat.

5. Verwendung nach einem beliebigen der Ansprüche 2 bis 4, wobei x im Bereich von 0,1 bis 0,75, vorzugsweise von 0,1 bis 0,3, liegt.

6. Verwendung nach einem beliebigen der Ansprüche 2 bis 5, wobei x gleich 0,2 ist.

7. Verwendung nach einem beliebigen der Ansprüche 2 bis 6, wobei das Reaktionssintern bei einer Temperatur durchgeführt wird, die im Bereich von 400 bis 500 °C, vorzugsweise von 400 bis 450 °C, liegt.

8. Verwendung nach einem beliebigen der Ansprüche 2 bis 7, wobei das Reaktionssintern unter einem uniaxialen Druck durchgeführt wird, der im Bereich von 15 bis 150 MPa, vorzugsweise von 40 bis 100 MPa, liegt.

9. Verwendung nach einem beliebigen der Ansprüche 2 bis 8, wobei die Dauer des Reaktionssinterns, gerechnet ab dem Zeitpunkt, an dem die Sintertemperatur erreicht ist, 3 bis 30 Minuten, vorzugsweise 5 bis 20 Minuten, beträgt.

10. Verwendung nach einem beliebigen der vorhergehenden Ansprüche, wobei das Iod, das im Iod-Apatit vorliegt, ein radioaktives Iod ist.

11. Verwendung nach Anspruch 10, wobei es sich bei dem radioaktiven Iod um Iod 129 handelt.
